# DEMANDE DE BREVET EUROPEEN

(11) **EP 1 205 159 A1**
(43) Date de publication de la demande: **15.05.2002**
(21) Numéro de dépôt: 00811067.8
(22) Date de dépôt: 13.11.2000
(51) Int. Cl.: A61C 8/00, A61C 1/08

(54) **Dispositif de positionnement pour la pose de prothèses dentaires implanto-portées**

(71) Demandeur: Germanier, Yves, 1201 Geneve (CH)
(72) Inventeur: Germanier, Yves, 1201 Geneve (CH)
(74) Mandataire: Savoye, Jean-Paul

(57) **Abrégé**

Ce dispositif de positionnement pour la pose de prothèses dentaires implanto-portées dans l'os maxillaire ou pour la greffe osseuse sur l'os maxillaire, comporte des implants temporaires (1) de positionnement selon deux dimensions, un organe de positionnement (4) selon la troisième dimension, des moyens (5) pour la fixation dudit organe de positionnement (4) sur ces implants temporaires (1) dans une position axiale déterminée, un organe de liaison (6) muni d'une part, d'une surface d'emboîtement axial, complémentaire d'une surface d'emboîtement dudit organe de positionnement (4) et d'autre part d'une surface destinée à être fixée à un élément de guidage (7, 7') ou un élément prothétique.

## Description

La présente invention se rapporte à un dispositif de positionnement pour la pose de prothèses dentaires implanto-portées.

L'idée d'implanter des racines artificielles en remplacement de dents manquantes ou comme piliers de prothèses est connue. Les implants dentaires, généralement en titane, sont vissés dans l'os des maxillaires où, après ostéointégration, c'est-à-dire « cicatrisation » de l'os autour de l'implant, ils serviront de piliers stables sur lesquels seront fixées les futures restaurations prothétiques (couronnes, ponts ou prothèses amovibles).

Chez un patient totalement édenté, la réalisation d'un pont total porté par des implants constitue, lorsque les conditions anatomiques locales sont respectées, la meilleure alternative à une prothèse totale amovible, tant du point de vue du confort que de la fonction masticatrice ou de l'esthétique.

La pérennité de l'implant dépend directement de la qualité de sa liaison avec l'os dans lequel il est inséré, une phase d'attente de 2 à 6 mois, pendant laquelle l'implant doit rester à l'abri de toute contrainte mécanique néfaste, est généralement nécessaire entre le moment de sa pose et sa mise en charge, afin d'obtenir une ostéointégration suffisante.

Paradoxalement, il est aujourd'hui clairement démontré que la mise en charge d'implants le jour même de leur insertion (mise en charge immédiate) est possible, par exemple dans le cas des restaurations de maxillaires édentées à l'aide de structures rigides telles que des pont totaux, sans compromettre de manière significative leur pronostic à long terme. La raison de cette particularité tient à une meilleure stabilisation des implants individuels et à une répartition plus uniforme des contraintes mécaniques par la structure rigide du pont total, ne compromettant pas le phénomène d'ostéointégration.

La réalisation d'un pont total porté par des implants pose néanmoins de nombreux problèmes techniques liés à leur insertion correcte. Hormis le fait de devoir être insérés à des emplacements précis, ils doivent également l'être dans un axe rigoureusement parallèle permettant l'insertion post-opératoire du pont.

Pour cette raison, la phase chirurgicale est tout d'abord précédée d'une phase dite de planification, au cours de laquelle la future prothèse est réalisée en cire, à des fins diagnostiques sur des moulage des mâchoires du patient. Elle permet notamment de décider du nombre, de la position et de l'axe d'insertion des futurs implants. Pour qu'il puisse s'établir une continuité logique entre cette étape préliminaire et la phase chirurgicale, il est essentiel d'utiliser un dispositif de transfert lors de la pose des implants: le guide chirurgical. Ce dernier se présente comme une réplique en résine acrylique transparente de la future restauration prothétique. Posé en bouche, sur la gencive édentée, il est doté de puits parallèles servant au forage des lits implantaires dans l'os des maxillaires aux emplacements prédéterminés.

Son utilisation devient cruciale dans le cas de restaurations de maxillaires édentés par des ponts totaux, accompagnées de mise en charge immédiate, où l'insertion postopératoire du pont provisoire n'est possible que si les implants sont placés d'une manière rigoureusement parallèle. De plus, deux autres paramètres doivent également être respectés dans une telle situation pour permettre une occlusion (ou engrènement) correcte du pont avec les dents antagonistes: la dimension verticale de l'occlusion (DVO) et la relation inter-maxillaire (RIM). La DVO représente la hauteur de l'étage inférieur du visage, délimitée par le bord inférieur du nez et le bord inférieur du menton. La RIM représente, dans le plan horizontal, la position de la mâchoire inférieure par rapport à la mâchoire supérieure.

Ces trois références sont établies chez l'édenté total soit par la morphologie de sa (ses) prothèse(s) existantes, soit par le montage diagnostique des dents réalisé durant la phase préliminaire. Il est essentiel que ces paramètres soient transposés au futur pont qui sera mis en bouche aussitôt les implants définitifs insérés. Leur non respect aboutit à un trouble de l'occlusion dentaire et à diverses manifestations cliniques (douleurs, fatigue musculaire, mauvaise fonction masticatrice, etc.), généralement intolérables pour le patient.

Jusqu'à présent, seuls des guides chirurgicaux reposant sur la gencive édentée ont été utilisés lors de la restauration implantaire de maxillaires édentés. De telles restaurations nécessitent généralement l'incision et la réclination d'une grande surface de gencive qui compromettent la stabilité per-opératoire du guide chirurgical à support muqueux. De plus il n'existe actuellement aucune méthode d'enregistrement et de report fiable de la DVO et de la RIM préopératoires, permettant une adaptation précise du pont provisoire selon ces critères.

Le but de la présente invention est de remédier, au moins en partie, à cette situation.

A cet effet, la présente invention a tout d'abord pour objet un dispositif de positionnement d'implants pour la pose de prothèses dentaires implantables dans l'os des maxillaires selon la revendication 1.

L'avantage essentiel de ce dispositif est de procurer une référence osseuse absolue, exploitable aussi bien sur le maxillaire à restaurer que sur le moulage de la crête édentée sur lequel s'effectue une part importante du travail de préparation de la prothèse. Sur le maxillaire édenté, le dispositif bénéficie d'une référence exclusivement osseuse. Le maintien de cette référence dans les trois dimensions de l'espace est assuré par des implants temporaires que l'on insère dans l'os au début de l'intervention. Ceux-ci sont reliés au guide chirurgical par des organes de positionnement permettant à tout moment le retrait puis le repositionnement exact du guide sur ses supports. Cette référence persiste même après l'incision de la gencive, étant donné que l'implant temporaire, une fois relié à l'organe de positionnement, assure un repositionnement exact du guide chirurgical, indépendamment de l'état de la gencive qui n'entre plus en considération dans le positionnement du guide chirurgical.

Grâce aux organes de positionnement, l'emplacement des implants temporaires peut être transféré, après empreinte de la crête édentée et des organes de positionnement, du maxillaire du patient au moulage de la gencive édentée sans jamais perdre la référence initiale pré-opératoire. La DVO et la RIM sont ainsi maintenues tout au long de l'intervention et le pont peut ainsi être facilement adapté aux implants définitifs selon la DVO et la RIM pré-opératoires.

L'insertion post-opératoire d'une structure rigide telle qu'un pont n'étant possible que si les implants définitifs ont été placés dans un même axe il est nécessaire de pratiquer des forages parallèles à travers le guide chirurgical à l'emplacement des futures implants définitifs.

Un autre avantage du dispositif de positionnement selon la présente invention réside dans le fait qu'il entre aussi bien dans la fabrication du pont que du guide chirurgical, de sorte que l'on garantit ainsi la même précision sur les deux organes.

Le dessin annexé illustre, schématiquement et à titre d'exemple, une forme d'exécution du dispositif de positionnement objet de cette invention.

La figure 1 est une vue en coupe axiale du dispositif de positionnement fixé dans l'os d'un maxillaire et avec une partie du guide chirurgical;
la figure 2 est une vue en perspective du guide chirurgical disposé sur le maxillaire ou le moulage du maxillaire à réhabiliter;
la figure 3 est une autre vue en perspective du guide chirurgical après enlèvement de sa surface latérale de positionnement;
la figure 4 est une variante de la figure 1 illustrant une application du dispositif selon l'invention dans le cas d'une greffe osseuse sur un maxillaire.

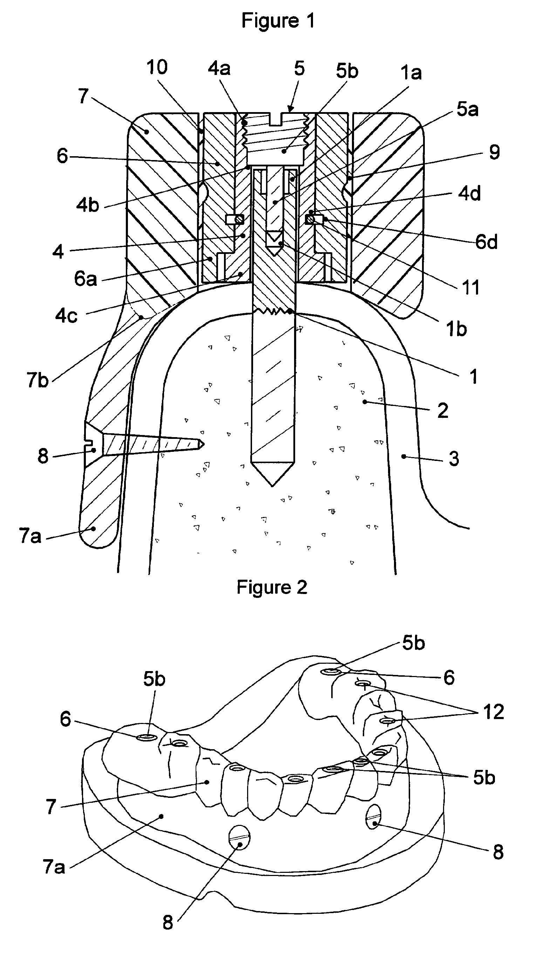

Le dispositif de guidage selon l'invention, illustré par la figure 1 comporte un implant temporaire 1, dont la partie distale est vissée dans l'os d'un des maxillaires 2 à travers la gencive 3 qui le recouvre. Cet implant temporaire 1 constitue une référence de position dans deux dimensions. La référence de position dans la troisième dimension est assurée par un organe de positionnement tubulaire 4 disposé sur la partie proximale de l'implant temporaire 1 faisant saillie hors de la gencive 3. Cet organe de positionnement 4 est libre par rapport à l'implant temporaire 1, c'est-à-dire qu'il n'est pas ajusté sur cet implant temporaire 1, de sorte que l'implant temporaire peut être librement inséré dans l'os à travers l'organe de positionnement 4.

L'implant temporaire 1 est constitué par une vis auto-taraudeuse munie d'une cavité 1a à une de ses extrémités, conformée pour permettre à un mandrin de vissage de venir en prise avec elle pour la relier à une clé à cliquet à main ou à un micromoteur d'entraînement. Le fond de la cavité 1a communique avec un trou borgne fileté 1b.

La partie proximale de la surface interne de l'organe de positionnement tubulaire 4 engagé sur la partie de l'implant temporaire 1 sortant de la gencive 3, est de section supérieure à la partie distale de cette surface interne et présente un filetage 4a. Une vis de stabilisation 5 comporte deux filetages, l'un sur sa tige 5a comme une vis normale, l'autre sur sa tête 5b. Le filetage de la tige 5a de cette vis de stabilisation 5 vient en prise avec le filetage du trou borgne 1b de l'implant 1 et celui de sa tête 5b vient en prise avec le filetage 4a de la surface interne de l'organe de positionnement tubulaire 4. Lorsque la tête de vis 5b arrive en butée contre la portée 4b située au fond de la portion de plus grande section de la partie proximale de la surface interne de plus grand diamètre de l'organe de positionnement tubulaire 4, la position axiale de cet organe de positionnement tubulaire 4 est déterminée. Il est évident que l'extrémité externe de l'implant 1 doit se situer en retrait par rapport à la portée 4b pour que la position axiale de l'organe de positionnement 4 sur l'implant 1 corresponde au niveau réel de la surface alvéolaire de la gencive 3. En effet, si tel n'était pas le cas, la tête de vis arriverait en butée contre l'extrémité de l'implant 1 et tirerait vers elle l'organe de positionnement tubulaire 4 jusqu'à ce que sa butée 4b rencontre la tête de vis 5b, ne fournissant plus le repère désiré.

La base de l'organe de positionnement tubulaire 4 se termine par une butée annulaire 4c sur laquelle s'appuie un organe de liaison tubulaire 6 dont la face interne est complémentaire de la face latérale externe de l'organe de positionnement tubulaire 4, permettant l'emboîtement axial et le positionnement de l'organe de liaison tubulaire 6 sur l'organe de positionnement tubulaire 4. De préférence, le diamètre de la butée annulaire 4c est sensiblement plus petit que le diamètre extérieur de l'organe de liaison tubulaire 6 et est logé à l'intérieur d'une paroi annulaire plus mince 6a, ménagée à la base de cet organe de liaison 6.

Pour maintenir l'organe de positionnement 4 emboîté axialement dans l'organe de liaison dans les phases précédant sa fixation sur l'implant temporaire 1, il est possible de prévoir un mécanisme élastique de retenue, se présentant par exemple sous la forme de deux gorges annulaires 4d, 6d ménagées l'une en face de l'autre dans les faces cylindriques d'emboîtement de l'organe de positionnement tubulaire 4, respectivement, de l'organe de liaison 6. Un fil ressort 10 de type corde à piano, conformé en forme d'anneau fendu non circulaire est logé dans ces gorges annulaires 4d, 6d en passant de l'une à l'autre de ces gorges annulaires 4d, 6d, empêchant ainsi la séparation axiale des pièces emboîtées 4 et 6. Lorsqu'une force axiale suffisante est exercée en vue de séparer ces deux pièces emboîtées 4 et 6, le ressort est déformé pour se loger dans l'une ou l'autre des gorges annulaires 4d, 6d, permettant alors la séparation axiale de ces deux pièces 4, 6.

Le dispositif de positionnement selon l'invention ayant été décrit, nous allons expliquer le mode de mise en oeuvre de ce dispositif. Le guide chirurgical 7 est confectionné en résine acrylique selon le modèle de la future prothèse, lui-même réalisé sur un moulage du maxillaire édenté à réhabiliter. Le guide chirurgical 7 est muni d'ouvertures parallèles 12 destinées à la pose des implants définitifs (non représentés) de même que des organes de liaison tubulaires 6 auxquels sont associés les organes de positionnement 4. Les organes de liaison tubulaires 6 sont fixés dans les ouvertures du guide chirurgical 7 par de la résine liquide à prise rapide à basse température 10. Cette résine peut être par exemple du méthacrylate de méthyle ou de la résine époxy. Etant donné la présence de la paroi 6a entourant la butée axiale 4c de l'organe de positionnement tubulaire 4, la résine liquide 10 introduite entre l'organe de liaison 6 et l'ouverture ménagée à travers le guide chirurgical 7 ne risque pas de coller accidentellement l'organe de positionnement tubulaire 4 au guide chirurgical 7. L'alésage de l'organe de positionnement 4 sert au guidage de la mèche de forage destiné au vissage de l'implant temporaire 1.

Le guide chirurgical 7 (figure 1) comporte un bandeau vestibulaire 7a dont la face interne épouse la forme du relief osseux, de sorte que ce bandeau vestibulaire 7a permet de positionner avec précision le guide chirurgical 7 sur le maxillaire.

Le guide chirurgical 7 possédant la même anatomie que le futur pont, on commence par le fixer temporairement en position d'occlusion des mâchoires à l'os du maxillaire à réhabiliter à l'aide de trois ou quatre vis autotaraudeuses 8 vissées dans l'os maxillaire, à travers le bandeau vestibulaire 7a du guide chirurgical 7. Cette stabilisation initiale du guide en position d'occlusion des mâchoires garantit que la pose des futurs implants définitifs se fasse selon la DVO et la RIM choisies avant l'intervention. Ensuite, on perce l'os à travers les alésages des organes de positionnement 4 du guide chirurgical 7, aux endroits destinés à recevoir les implants temporaires 1. Le nombre de ces implants temporaires 1 est de trois ou quatre. Lorsqu'il s'agit d'une restauration complète d'un maxillaire édenté, deux implants temporaires 1 peuvent être placés dans la région molaire, l'autre ou les autres peuvent être disposés dans la région incisivo-canine aux emplacements laissés libres par les emplacements prévus pour les implants définitifs.

Après avoir vissé les implants temporaires 1 en les laissant dépasser de la longueur désirée afin qu'ils se situent à une distance du dessus de la gencive plus faible que la portée 4b de l'organe de positionnement tubulaire 4, on visse une vis de stabilisation 5 dans l'implant temporaire 1 et dans l'organe de positionnement 4, jusqu'à ce que la tête de vis 5b rencontre la portée 4b.

Le fait que le diamètre de la butée annulaire 4c soit sensiblement plus petit que le diamètre extérieur de l'organe de liaison tubulaire 6 permet d'éviter que la résine 10 introduite entre l'organe de liaison 6 et le guide chirurgical 7 ne colle celui-ci à l'organe de positionnement 4. Par conséquent, une fois les vis 5 insérées, on peut dévisser les vis provisoires 8 du maxillaire et enlever le guide chirurgical 7.

A partir de cette étape, la partie vestibulaire 7a du guide chirurgical 7 est éliminée jusqu'aux traits mixtes 7b afin de permettre de replacer le guide chirurgical 7 sur les dispositifs de guidage, en emboîtant les surfaces internes des organes de liaison 6 solidaires du guide chirurgical 7 sur les organes de positionnement tubulaires 4 respectifs.

Entre-temps, la gencive 3 aura été incisée et écartée de l'os maxillaire, mais le guide chirurgical retrouve sa position initiale grâce aux dispositifs de positionnement selon l'invention.

Le pont provisoire (non représenté) qui sera fixé sur les implants définitifs à la fin de l'intervention, est une réplique, réalisée en résine esthétique, du guide chirurgical 7. Ces deux dispositifs, qui sont réalisés durant la phase préparatoire, possèdent des organes de positionnement 4 et de liaison 6 identiques, placés aux mêmes endroits. Etant de ce fait interchangeable, le pont provisoire peut être directement adapté aux implants définitifs sur le moulage post-opératoire du maxillaire réhabilité, selon la DVO et la RIM pré-opératoire. Ce moulage est réalisé par empreinte simultanée des implants définitifs et des implants temporaires 1, solidarisés aux organes de positionnement 4 par les vis de stabilisation.

L'organe de positionnement 4 et l'organe de liaison 6 peuvent être en métal ou en une résine dure. L'implant provisoire 1 peut être en acier inoxydable ou en titane.

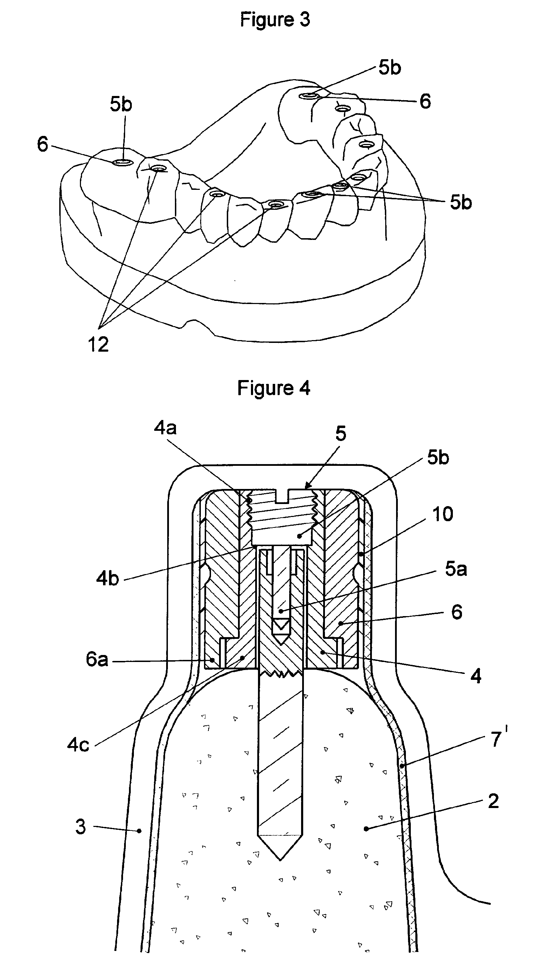

Dans une variante illustrée par la figure 4, le dispositif selon l'invention est utilisé pour effectuer une greffe osseuse sur un maxillaire, en tant que phase préliminaire à sa restauration. Dans cette variante, le guide chirurgical est remplacé par une grille de contention 7' en titane ou en acier inoxydable destinée à positionner et à maintenir l'os greffé sur le maxillaire. Le dispositif de positionnement selon l'invention permet de déterminer avec précision la position de la grille de contention 7' par rapport au maxillaire sur lequel l'os est greffé. Pendant la période de prise de la greffe osseuse, la grille de contention 7' est recouverte par la gencive 3.

## Revendications

1. Dispositif de positionnement pour la pose de prothèses dentaires implanto-portées dans l'os maxillaire ou pour la greffe osseuse sur l'os maxillaire, **caractérisé en ce qu'**il comporte des implants temporaires (1) de positionnement selon deux dimensions, un organe de positionnement (4) selon la troisième dimension, des moyens (5) pour la fixation dudit organe de positionnement (4) sur ces implants temporaires (1) dans une position axiale déterminée, un organe de liaison (6) muni d'une part, d'une surface d'emboîtement axial, complémentaire d'une surface d'emboîtement dudit organe de positionnement (4) et d'autre part d'une surface destinée à être fixée à un élément de guidage (7, 7') ou un élément prothétique.

2. Dispositif de positionnement selon la revendication 1, **caractérisé en ce que** ledit organe de positionnement (4) est un organe tubulaire dont la surface interne est engagée sur l'extrémité proximale dudit implant temporaire (1) et dont la surface externe forme une surface d'emboîtement, que la section de la portion proximale formé par ladite surface interne est plus grande que celle de sa portion distale et est munie d'un filetage (4a), qu'une butée axiale (4c) est solidaire de ladite surface d'emboîtement, que ledit organe de liaison (6) est aussi un organe tubulaire dont la surface interne est complémentaire de ladite surface d'emboîtement dudit organe de positionnement (4) et **en ce que** lesdits moyens de fixation (5) comportent une vis à tête présentant deux portions filetées, l'une solidaire de la tige (5a) de cette vis destiné à se visser dans ledit implant provisoire (1), l'autre solidaire de sa tête, destinée à venir en prise avec le filetage (4a) de ladite portion proximale dudit organe de positionnement (4), pour fixer la position axiale de cet organe de positionnement (4) par rapport audit implant (1) lorsque ladite tête de vis (5b) en prise avec le filetage (4a) de ladite partie proximale, bute contre la portée (4b) formée entre cette portion proximale de plus grand diamètre et celle de plus petit diamètre.

3. Dispositif selon l'une des revendications précédentes, **caractérisé en ce que** ledit implant temporaire (1) est formé par une vis auto-taraudeuse dont l'extrémité externe présente une cavité (1a) conformée pour permettre à un mandrin de vissage de venir en prise avec elle.

4. Dispositif de positionnement selon l'une des revendications précédentes, **caractérisé en ce que** ladite surface dudit organe de liaison (6) destinée à être fixée à un élément de guidage (7, 7') ou à un élément prothétique est conformée pour améliorer l'accrochage avec un liant de fixation (10) de cet organe de liaison (6) audit guide (7, 7') ou à ladite prothèse.

5. Dispositif de positionnement selon l'une des revendications précédentes, **caractérisé en ce que** ledit organe de guidage (7) est un guide chirurgical pour déterminer les positions respectives d'implants définitifs.

6. Dispositif de positionnement selon l'une des revendications précédentes, **caractérisé en ce que** ledit organe de guidage (7') est un organe de contention pour effectuer une greffe osseuse sur un maxillaire.

7. Dispositif de positionnement selon l'une des revendications précédentes, **caractérisé en ce qu'**il comporte des moyens de retenue élastiques (4d, 6d, 11) disposés entre les surfaces d'emboîtement complémentaires dudit organe de positionnement (4) et dudit organe de liaison (6).
